(19) Europäisches Patentamt
European Patent Office
Office européen des brevets

(11) **EP 0 677 382 B1**

(12) **EUROPEAN PATENT SPECIFICATION**

(45) Date of publication and mention
of the grant of the patent:
**12.08.1998 Bulletin 1998/33**

(51) Int. Cl.⁶: **B32B 27/36**, C08G 63/672,
B65D 65/40

(21) Application number: **95105537.5**

(22) Date of filing: **12.04.1995**

(54) **Polyester film for laminated drawn and ironed aluminum can**

Polyesterfilm für gezogene und gewalzte Behälter aus Aluminium

Feuille en polyester pour boîte étirée et laminée en aluminium

(84) Designated Contracting States:
**DE FR GB NL**

(30) Priority: **14.04.1994 JP 75783/94**

(43) Date of publication of application:
**18.10.1995 Bulletin 1995/42**

(73) Proprietor:
**DIAFOIL HOECHST CO., LTD**
**Bunkyo-ku Tokyo (JP)**

(72) Inventor: **Tate, Masashi**
**Nagahama-shi, Shiga-ken (JP)**

(74) Representative:
**TER MEER STEINMEISTER & PARTNER GbR**
**Mauerkircherstrasse 45**
**81679 München (DE)**

(56) References cited:
**EP-A- 0 035 835**          **EP-A- 0 312 306**
**EP-A- 0 312 307**

**Description**

BACKGROUND OF THE INVENTION

The present invention relates to a polyester film suited for laminating D/I (drawn and ironed) aluminum cans.

It has become increasingly popular recently to cover metal plates with a thermoplastic resin film and use the covered plates as a material for metallic cans. In the case of the conventional coated plates obtained by coating metal plates with a thermosetting resin and baking to set the coat, it is difficult to perfectly eliminate metal exposure due to pinholes or other causes even if the coating thickness is increased or the metal plate is double-coated, but the metal exposure can be almost perfectly eliminated in the case of the thermoplastic resin-covered metal plates. Also, in the case of the conventional coated plates, a large amount of solvent is used for coating and baking to dry, but by heat-sealing a heat-sealable thermoplastic resin, it is possible to accomplish covering without using a solvent. As the thermoplastic resin, polyesters, which is excellent in heat resistance, workability and gas barrier properties, have generally been used.

Polyethylene terephthalate, which is widely used as material of plastic containers and oriented films, has excellent heat resistance, workability and gas barrier properties, but it lacks sufficient heat-sealability for laminating metallic cans, so that polyesters obtained by copolymerization with isophthalic acid and other copolymerization components have been proposed (see, for example, Japanese Patent Application Laid-Open (KOKAI) No. 4-105922 (1992)).

However, it is empirically known, although the reason is not yet clear, that when the copolymerized polyethylene terephthalate is used, the oligomer separation rate is high and an amount of oligomer which separates when subjected to a heat treatment is larger than that in the case of polyethylene terephthalate. Therefore, in case the copolymerized polyethylene terephthalate is used for covering of beverage cans, oligomers maybe released into the can content when the cans are subjected to retort treatment for sterilization or other purpose.

EP-A 0 312 307 discloses a laminated metal sheet having adhered to one of its major surfaces a composite co-extruded polyolifin-containing film (B) comprising a plurality of layers. According to one embodiment, a film (A) of a thermoplastic polymer is adhered to the other major surface of the metal sheet. Typically, the thermoplastic polymer film (A) may be a composite polyester film comprising a thinner inner layer (A1) of a substantially non-crystaline (i.e. amorphous) linear polyester which has a softening point below 150°C and a melting point above 150°C but below 240°C, and a thicker outer layer (A2) having a melting point above 220°C. The ratio of the thickness of the outer polyester layer (A2) to the inner polyester layer (A1) is between 12 and 4.

As a result of studies for overcoming the above problems, the present inventor has found that by using a laminated polyester film having at least two layers in which a layer (A) to be contacted with a base metal (aluminum) is composed of a polyester having a melting point of 160 to 245°C and has a thickness of not less than 3 μm and a surface crystallinity of not more than 10%, and a layer (B) disposed on the side not contacting aluminum is composed of a polyester having a copolymerization ratio of not more than 5 mol% and has a thickness of 0,1 to 3,0 μm, the peel strength of the obtained film laminated to the D/I aluminum can is remarkably increased and there takes place no separation of organic substances such as oligomers from the inside of the film even when the laminated can is subjected to a retort treatment. The present invention has been attained on the basis of this finding.

SUMMARY OF THE INVENTION

The object of the present invention is to provide a polyester film to be used for laminating D/I aluminum cans, which film has a high peel strength to aluminum and is free from separation of organic substances such as oligomers from the inside of the film even when the can laminated with the film is subjected to a retort treatment.

To accomplish the aim, in an aspect of the present invention, there is provided a polyester film for laminating D/I aluminum cans, comprising a multilayered film in which a layer A to be contacted with aluminum is composed of a polyester having a melting point of 160 to 245°C and has a thickness of not less than 3 μm and a surface crystallinity of not more than 10%, and a layer B disposed on the side not contacting aluminum is composed of a polyester with a copolymerization ratio of not more than 5 mol% and has a thickness of 0.1 to 3.0 μm.

DETAILED DESCRIPTION OF THE INVENTION

The polyester film of the present invention is used for laminating D/I aluminum cans. The term "D/I aluminum can" used herein refers to a can obtained by drawing an aluminum plate into the form of a cup between a draw die and a punch, and ironing the thus obtained cup-shaped can wall between an ironing die and a punch to reduce the wall thickness.

The aluminum plate used for the purpose of the present invention may be made of aluminum alone or of an aluminum alloy containing small quantities of manganese, magnesium, zinc, copper or the like. Such aluminum plate, either made of aluminum alone or of the aluminum alloy, may have been subjected to a chromic acid treatment or a chromic acid/phosphoric acid treatment.

The polyesters used in the present invention are the polymers produced by polycondensing one or more dicarboxylic acids and one or more glycols. Examples of the dicarboxylic acids include aromatic dicarboxylic acids such as terephthalic acid, isophthalic acid, phthalic acid, 2,6-naphthalenedicarboxylic acid and 4,4'-diphenyldicarboxylic acid, and aliphatic dicarboxylic acids such as adipic acid and sebacic acid. Examples of the glycols include ethylene glycol, propylene glycol, diethylene glycol, triethylene glycol, 1,3-propanediol, 1,4-butanediol, neopentyl glycol and 1,4-cyclohexanedimethanol.

Surface crystallinity of the layer A (the layer to be contacted with aluminum) of the film according to the present invention is not more than 10%, preferably not more than 6%, more preferably not more than 3%. If the surface crystallinity of the layer A exceeds 10%, there may take place wrinkling of the film or entrapment of air when the film is heat-sealed on aluminum, making it difficult to perform uniform and flat laminating.

Melting point of the polyester composing the layer A is 160 to 245°C, preferably 180 to 220°C, more preferably 185 to 210°C. When the melting point of the polyester is less than 160°C, the produced film may be too high in heat adhesiveness, and therefore when such film is rolled up and kept in storage in that state as normally done, the film may be heat-sealed by itself under certain storage environment. When the melting point of the polyester is higher than 245°C, the peel strength of the film may become unsatisfactory. For providing a melting point in the above-defined range, it is preferable to use a copolymerized polyethylene terephthalate having a copolymerization ratio of not more than 40 mol%, preferably not more than 35 mol%, more preferably not more than 30 mol%, as the polyester constituting the layer A. By using the copolymerized polyethylene terephthalate, it is possible to obtain a preferred film having a satisfactory degree of heat adhesiveness and a practical mechanical strength. As the copolymerizable monomer other than terephthalic acid and ethylene glycol, it is preferable to use isophthalic acid, diethylene glycol, and triethylene glycol because they are relatively inexpensive and may provide superior properties.

Thickness of the layer A is not less than 3 $\mu$m. When the layer A thickness is less than 3 $\mu$m, although heat-sealing can be accomplished, adhesive strength to aluminum is unsatisfactory and the film may easily peel off from aluminum in the drawing and ironing step. Practically, the upper limit of layer A thickness is about 30 $\mu$m.

Regarding the polyester constituting the layer B (the layer disposed on the side not contacting aluminum) of the polyester film of the present invention, the copolymerization ratio of the polyester is not more than 5 mol%, When it exceeds 5 mol%, the oligomer separation rate elevates excessively in the heat treatment.

The layer B thickness is 0.1 to 3.0 $\mu$m, preferably 0.2 to 3.0 $\mu$m, more preferably 0.3 to 3.0 $\mu$m. When the thickness is less than 0.1 $\mu$m, the oligomer which may separate from the inside of the polyester layer adjoining the layer B, if any, may be released out through the layer B. Also, since the layer B is relatively poor in moldability, when the layer thickness is greater than 3.0 $\mu$m, there may take place nonuniform molding or break of the film during drawing and ironing operations.

The polyester film of the present invention may have one or more intermediate layers between the layers on both sides of the film. For instance, a layer containing a pigment of the background color may be provided as intermediate layer in the film applied on the external side of aluminum can where various types of printing is made. Provision of the intermediate layer can dispense with printing of the background color. The intermediate layer is not necessarily be composed of polyester or other thermoplastic polymers; a thin layer of aluminum or an aluminum deposit having excellent gas barrier properties and suited for metallic ornament or a gold or platinum deposit having an excellent ornamental effect may be provided as the intermediate layer.

The polyester film of the present invention preferably has surface projections for appropriate slip property. Usually, particles (0.1 to 3.5 $\mu$m in average particle size) having sufficient rigidity as compared with the film are added in the film in an amount of $10^7$ to $10^{13}$ particles/cm$^3$-polymer and the film is stretched to form the surface projections with the particles as nucleus. As such particles, there can be used inorganic particles of metal oxides such as alumina and silica and salts such as calcium carbonate, and organic particles of crosslinked polymers. The size of these particles is properly selected in consideration of the required slip property and projection forming method. When the particle size exceeds 3.5 $\mu$m, the interfacial separation between the layer B and other layers or release of the added particles from the film may arise.

The polyester film of the present invention can be produced according to the conventional methods. Some examples of the methods are described below.

The polyester layers composing both sides of the film are usually formed by melt-extruding polyester from a T-die into a sheet form and rapidly cooling the extrudate to a temperature below the glass transition point of the polyester on a casting drum. When an intermediate layer is provided besides both surface layers A and B, if the intermediate layer is composed of a polyester or other thermoplastic resin similar to that used for the layers A and B, there can be suitably employed the coextrusion method in which the respective layers are extruded all together and rapidly cooled and solidified in a stack state.

Instead of coextruding all of the layers at one time, each layer or plural layers may be extruded or co-extruded separately and the obtained films may be laminated with an adhesive or by other methods such as heat sealing. It is also possible to employ a method in which the sheets obtained by the solvent casting method are laminated with an adhesive or by heat sealing, and a method in which the solvent casting is conducted on sheets obtained by the melt extrusion method or solvent casting method. In case of using a method in which the sheets are bonded to each other or subjected to solvent casting, a suitable metal such as aluminum, gold or platinum may be deposited on each sheet to an appropriate thickness according to the purpose of use, or a thin metal film such as aluminum foil may be interposed between the sheets before bonding.

The polyester film of the present invention may not necessarily be oriented or crystallized, but if necessary it may be subjected to successive biaxial stretching which is commonly practiced in production of polyethylene terephthalate films.

The polyesters, polymers or inorganic materials constituting the respective layers of the finally obtained laminated film usually require different stretching and molding conditions, and in such a case, it is preferable to employ a method in which only the layers requiring the similar stretching and molding conditions are first stretched and then bonded.

An example of the production process with respect to the most simple structure, namely the structure having only two layers A and B, is described below.

First, the starting polyesters for the layers A and B are separately melted, coextruded from a T-die, with the flow passages being joined immediately before extrusion, and rapidly cooled and solidified into a glassy state on a casting drum. The obtained sheet is stretched in the machine direction by a roll stretcher at a temperature sufficiently high to bring both polyesters into a rubbery state. When the temperature is too high, the layer B with relatively high crystallinity may undergo thermal crystallization due to orientation, so that stretching should be conducted in a proper temperature range. The thus obtained uniaxially stretched film is then stretched in the transverse direction by a tenter at a temperature in the range from the temperature used for stretching in the machine direction to 170°C, and then heat-treated at 100 to 240°C in the tenter to obtain a biaxially stretched film. If necessary, the film may be restretched in the machine direction and transverse directions by using a roll stretcher and a tenter, respectively.

The D/I aluminum can-laminating polyester film according to the present invention usually has the following properties: oligomer separation of not more than 5 $\mu m/cm^2$ (2 atm, 121°C, 60 min); joint failure (peel and break) frequency of almost equal to or less than the aluminum plate break frequency; and elongation at break of the film of not less than 100%, preferably not less than 200%.

The polyester film of the present invention, used as a D/I aluminum can-laminating film, has a high peel strength and is free from separation of organic substances such as oligomers from the inside of the film even when the can (such as beverage can) laminated with the film is subjected to a retort treatment. Thus, the present invention is of high industrial value.

EXAMPLES

The present invention is described in further detail below with reference to the examples thereof, which examples however are merely intended to be illustrative and not to be construed as limiting the scope of the invention. Evaluations of the film properties in the examples were made by the methods described below. In the Examples and Comparative Examples, all "parts" are "parts by weight" unless otherwise noted.

(1) Melting point (Tm [°C])

The peak top temperature of heat absorption peak due to crystal melting measured at a heating rate of 16°C/min with DSC-1 (Perkin Elmer Co., Ltd.) was shown as melting point.

(2) Surface crystallinity ($\chi c$ [%])

ATR determination was made with Nicolet 20DXB spectrometer. KRS-5 was used as IRE. The obtained data were waveform-separated to determine absorbance A973 at 973 $cm^{-1}$ and absorbance A895 at 895 $cm^{-1}$, and the surface crystallinity was calculated from the equation:

$$\chi c = \frac{1}{0.77} \cdot \left\{ \frac{1}{1 + 1.06(A895 \, / \, A973)} - 0.23 \right\}$$

(3) Layer thickness (d [μm])

Each sample film was embedded in a blend of an epoxy resin, a curing agent and an accelerator, and sliced to an approximately 200 nm-thick piece by an ultramicrotome to prepare a sample for observation. The obtained sample was subjected to its sectional observation under a transmission electron microscope H-9000 (Hitachi Co., Ltd.) to determine the thickness of each layer. Accelerating voltage was 300 kV, and the magnification was set within the range of 10,000× to 100,000× according to the layer thickness to be determined. Thickness measurement was made at 50 points, and the largest 10 measurements and the smallest 10 measurements were eliminated and the average of the remaining 30 measurements was given as the layer thickness.

(4) Copolymerization ratio (c [mol%])

Each sample film was dissolved in a deuterated solvent of trifluoroacetic acid and its $^1$H-NMR was measured by using Nippon Denshi EX270 spectrometer. The mol numbers of dicarboxylic acid residue and glycol residue were determined from the integral curve, and the copolymerization ratio c [mol%] was determined from the equation:

$$c = \left(1 - \frac{x2}{x1} \cdot \frac{y2}{y1}\right) \times 100$$

wherein x1 is the number of moles of the whole dicarboxylic acids, x2 is the number of moles of the principal dicarboxylic acid, y1 is the number of moles of the whole glycols, and y2 is the number of moles of the principal glycol.

(5) Separation of oligomer (r [μg/cm$^2$])

Sample film was heat-sealed on a 200 μm-thick aluminum plate which was induction-heated to 270°C, under a pressure of 10 kg/cm$^2$, and the laminated aluminum plate was subjected to a retort treatment in hot water of 121°C under 2 atm for 60 minutes. The retort water was washed with a large amount of chloroform and the oligomer in the retort water was extracted in the chloroform layer. The retort water and chloroform were separated and the chloroform layer was recovered. Chloroform was removed by vacuum distillation and the residual chloroform solubles were weighed. The mass of the obtained chloroform solubles was divided by the area of the coated surface of the retorted laminated aluminum plate to determine the amount (r) of oligomer which separated out.

Oligomer separation was evaluated according to the following criterion:

◯ : r ≤ 5 μg/cm$^2$
△ : r = 5-10 μg/cm$^2$
X : r ≥ 10 μg/cm$^2$

(6) Heat-sealability

The heat-sealability of the polyester film was represented by the property of the rapidly cooled product of the melt of the polyester composing the layer A. A sheet (12 μm-thick) of the polyester of the layer A was made by using a screw extruder, a T-die and chill rolls. Two 20 mm × 50 mm × 200 μm rectangular aluminum plates were prepared as specimen and the sheet was laminated thereto by heat-sealing: the two aluminum plates joined in parallel, overlapped portions was 20 mm × 5 mm and the overall length of the specimen after laminated was 95 mm. Laminating was made by using a heat seal tester TP701 (Tester Sangyo KK) at a temperature of 200°C and under a pressure of 3 kgf/cm$^2$.

The thus obtained aluminum plate specimen was placed in a chamber adjusted to 23°C and 50% RH and elongated till it broke at a pulling rate of 1 mm/min with a chuck interval of 40 mm by using a tensile tester INTESCO MODEL 2001 (Intesco Co.). Heat sealability was judged by frequency of the following break patterns:

◎ : joint failure frequency < aluminum plate break frequency
◯ : joint failure frequency ≈ aluminum plate break frequency
X : joint failure frequency > aluminum plate break frequency

(7) Moldability

Tensile test of the film was conducted at a temperature of 80°C, pulling rate of 200 mm/min, specimen width of 15 mm and chuck interval of 50 mm, and moldability was determined from the elongation at break of the film.

◯: No break occurred till 200% elongation (stretch ratio: 3).

△: Elongation at break was 100 to 200% elongation.

X: Film broke before reaching 100% elongation.

The starting polyesters used in the Examples and Comparative Examples were prepared according to the following methods.

[Preparation of polyesters]

Polyester (a)

100 parts of dimethyl terephthalate, 60 parts of ethylene glycol and 0.1 part of calcium acetate monohydrate were placed in a reactor, and ester exchange reaction was conducted. The reaction starting temperature was set at 170°C and the reaction temperature was raised gradually while evaporating away methanol so as to reach 230°C in four hours, to substantially complete the ester change reaction.

Then ethylene glycol slurry containing amorphous silicon oxide having an average particle size of 3 $\mu$m and 0.04 part of phosphoric acid were added, followed by addition of 0.04 part of antimony trioxide, and the polycondensation was conducted by a conventional method. The reaction temperature was raised gradually while lowering the pressure gradually, so that the reaction temperature and pressure reached 280°C and 0.3 mmHg in two hours. After additional two hours, the reaction was stopped to obtain a polyester containing 0.05 part of silicon oxide. The melting point was 262°C.

Polyester (b)

88 parts of dimethyl terephthalate, 12 parts of dimethyl isophthalate, 60 parts of ethylene glycol and 0.1 part of calcium acetate monohydrate were placed in a reactor, and ester exchange reaction was conducted. The reaction starting temperature was set at 170°C and the reaction temperature was raised gradually while evaporating away methanol so as to reach 230°C in four hours, to substantially complete the ester exchange reaction.

Then ethylene glycol slurry containing amorphous silicon oxide having an average particle size of 3 $\mu$m and 0.04 part of phosphoric acid were added, followed by addition of 0.04 part of antimony trioxide, and the polycondensation was conducted by a conventional method. The reaction temperature was raised gradually while lowering the pressure gradually, so that the reaction temperature and pressure reached 280°C and 0.3 mmHg in two hours. After additional two hours, the reaction was stopped to obtain a polyester containing 0.05 part of silicon oxide. The copolymerization ratio was 12 mol%, and the melting point was 235°C.

Polyester (c)

78 parts of dimethyl terephthalate, 22 parts of dimethyl isophthalate, 60 parts of ethylene glycol and 0.1 part of calcium acetate monohydrate were placed in a reactor and ester exchange reaction was conducted. The reaction starting temperature was set 170°C and the reaction temperature was raised gradually while evaporating away methanol so as to reach 230°C in four hours, to substantially complete the ester exchange reaction.

Then ethylene glycol slurry containing amorphous silicon oxide having an average particle size of 3 $\mu$m and 0.04 part of phosphoric acid were added, followed by addition of 0.04 part of antimony trioxide, and the polycondensation was conducted by a conventional method. The reaction temperature was raised gradually while lowering the pressure gradually so that the reaction temperature and pressure reached 280°C and 0.3 mmHg in two hours. After additional two hours, the reaction was stopped to obtain a polyester containing 0.05 part of silicon oxide. The copolymerization ratio was 22 mol%, and the melting point was 200°C.

Polyester (d)

100 parts of dimethyl terephthalate, 60 parts of ethylene glycol, 20 parts of diethylene glycol and 0.1 part of calcium acetate monohydrate were placed in a reactor and ester exchange reaction was conducted. The reaction starting temperature was set at 170°C and the reaction temperature was raised gradually while evaporating away methanol so as to reach 230°C in four hours, to substantially complete the ester exchange reaction.

Then ethylene glycol slurry containing amorphous silicon oxide having an average particle size of 3 $\mu$m and 0.04 part of phosphoric acid were added, followed by addition of 0.04 part of antimony trioxide, and the polycondensation was conducted by a conventional method. The reaction temperature was raised gradually while lowering the pressure gradually so that the temperature and pressure reached 250°C and 0.3 mmHg in two hours. After additional two hours, the reaction was stopped to obtain a polyester containing 0.05 part of silicon oxide. The copolymerization ratio was 20 mol%, and the melting point was 207°C.

Polyester (e)

Titanium oxide was incorporated in polyester (b) by using a twin-screw kneader/extruder TEM 35B (Toshiba Machine Co. Ltd.) to obtain a white polyester with a titanium oxide content of 20% by weight.

Polyester (f)

67 parts of dimethyl terephthalate, 33 parts of dimethyl isophthalate, 48 parts of ethylene glycol, 12 parts of diethylene glycol and 0.1 part of calcium acetate monohydrate were placed in a reactor and ester exchange reaction was conducted. The reaction starting temperature was set at 170°C and the reaction temperature was raised gradually while evaporating away methanol so as to reach 230°C in four hours, to substantially complete the ester exchange reaction.

Then ethylene glycol slurry containing amorphous silicon oxide having an average particle size of 3 μm and 0.04 part of phosphoric acid were added, followed by addition of 0.04 parts of antimony trioxide, and the polycondensation was conducted by a conventional method. The reaction temperature was raised gradually while the pressure was lowered gradually, so that the reaction temperature and pressure reached 280°C and 0.3 mmHg in two hours. After additional two hours, the reaction was stopped to obtain a polyester containing 0.05 part of silicon oxide. The copolymerization ratio was 54 mol%, and the melting point was 262°C.

Example 1

Polyester (a) and polyester (c) were coextruded at a discharge ratio of 2:13 to obtain an amorphous laminated sheet having a thickness of 180 μm. The sheet was stretched 3 times at 80°C by a roll stretcher, further stretched 4 times at 100°C by a tenter and then heat-set at 220°C in the tenter to obtain a 15 μm-thick laminated film.

Example 2

Polyester (a) and polyester (d) were coextruded at a discharge ratio of 2:13 to obtain a 180 μm-thick amorphous laminated sheet. The sheet was stretched 3 times at 80°C by a roll stretcher, further stretched 4 times at 100°C by a tenter and then heat-set at 220°C in the tenter to obtain a 15 μm-thick laminated film.

Example 3

Polyester (a), polyester (e) and polyester (c) were coextruded at a discharge ratio of 1:11:3 to obtain a 180 μm-thick amorphous a/e/c-laminated sheet. The sheet was stretched and heat-set as in Example 1 to obtain a 15 μm-thick laminated film.

Example 4

Polyester (a) and polyester (c) were respectively melt-extruded to form 24 μm-thick and 144 μm-thick amorphous monolayer sheets, and these sheets were stretched and heat-set as in Example 1 to obtain 2 μm-thick and 12 μm-thick films, except that the sheet made from polyester (c) was heat-set at 170°C since it was melted and broken when heat-set at 220°C. The thus obtained monolayer films and a 1 μm-thick aluminum foil were placed in the order of polyester (a) film/aluminum foil/polyester (c) film and heat-sealed at 250°C. The aluminum foil surface had been roughened by alkali etching.

Example 5

Polyester (a) was melt-extruded to form a 24 μm-thick amorphous monolayer sheet, and the sheet was stretched and heat-set as in Example 1 to obtain a 2 μm-thick film. Aluminum was deposited on the film to form a 50 nm-thick aluminum layer. Further, a chloroform solution of polyester (c) was applied on the aluminum-deposited side of the film and then chloroform was evaporated away to obtain a 15 μm-thick laminated film.

Example 6

The procedure of Example 1 was carried out except that polyester (f) was used in place of polyester (c) to obtain a

15 $\mu$m-thick laminated film.

## Comparative Example 1

The procedure of Example 1 was carried out except that polyester (b) was used in place of polyester (c) to obtain a 15 $\mu$m-thick laminated film.

## Comparative Example 2

Polyester (a), polyester (b) and polyester (c) were coextruded at a discharge ratio of 4:25:1 to obtain an amorphous a/b/c-laminated sheet, and the sheet was stretched and heat-set as in Example 1 to obtain a 15 $\mu$m-thick film.

## Comparative Example 3

The procedure of Example 1 was carried out except that the discharge ratio of polyester (a) and polyester (c) was changed to 1:29 to obtain a 15 $\mu$m-thick laminated film.

## Comparative Example 4

The procedure of Example 1 was carried out except that the discharge ratio of polyester (a) and polyester (c) was changed to 2:1 to obtain a 15 $\mu$m-thick laminated film.

## Comparative Example 5

The procedure of Example 1 was carried out except that polyester (b) was used in place of polyester (a) to obtain a 15 $\mu$m-thick laminated film.

The properties of the films obtained in the above Examples and Comparative Examples are summarized in Tables 1 and 2.

Table 1

| | Layer A | | | Intermediate layer* | Layer B | | Oligomer Separation (r) ($\mu$g/cm$^2$) |
|---|---|---|---|---|---|---|---|
| | Material* | Thickness ($\mu$m) | Surface crystallinity $\chi$c(%) | | Material* | Thickness ($\mu$m) | |
| Example 1 | c | 13 | 0 | None | a | 2 | 3 |
| Example 2 | d | 13 | 0 | None | a | 2 | 3 |
| Example 3 | c | 3 | 1 | e | a | 1 | 4 |
| Example 4 | c | 12 | 0 | Al foil | a | 2 | 3 |
| Example 5 | c (Coating) | 13 | 2 | Al deposit | a | 2 | 4 |
| Example 6 | f | 13 | 0 | None | a | 2 | 3 |
| Comp. Example 1 | b | 13 | 15 | None | a | 2 | 3 |
| Comp. Example 2 | c | 0.5 | 2 | b | a | 2 | 4 |
| Comp. Example 3 | c | 14.91 | 0 | None | a | 0.09 | 10 |
| Comp. Example 4 | c | 5 | 0 | None | a | 10 | 3 |
| Comp. Example 5 | c | 13 | 0 | None | b | 2 | 7 |

*) a to f represent polyester (a) to polyester (f), respectively.

Table 2

| | Heat-sealability | Moldability |
|---|---|---|
| Example 1 | ◎ | ○ |
| Example 2 | ◎ | ○ |
| Example 3 | ○ | ○ |
| Example 4 | ◎ | △ |
| Example 5 | ○ | ○ |
| Example 6 | ◎ | ○ |
| Comparative Example 1 | X | ○ |
| Comparative Example 2 | X | ○ |
| Comparative Example 3 | ◎ | ○ |
| Comparative Example 4 | ◎ | X |
| Comparative Example 5 | ◎ | ○ |

**Claims**

1. A polyester film for laminating drawn and ironed aluminum cans, comprising a multilayered film in which a layer A to be contacted with aluminum is composed of a polyester having a melting point of 160 to 245°C and has a thickness of not less than 3 μm and a surface crystallinity of not more than 10%, and a layer B disposed on the side not contacting aluminum is composed of a polyester with a copolymerization ratio of not more than 5 mol% and has a thickness of 0.1 to 3.0 μm.

2. The polyester film according to claim 1, wherein the polyester constituting the layer A is a copolymerized polyethylene terephthalate with a copolymerization ratio of not more than 40 mol%.

3. The polyester film according to claim 1, wherein the polyester constituting the layer A has an isophthalic acid component, a diethylene glycol component or triethylene glycol component as copolymerization component.

4. The polyester film according to claim 1, wherein the thickness of the layer A is 3 to 30 μm.

5. The polyester film according to claim 1, wherein an intermediate layer is provided between the layer A and the layer B.

6. The polyester film according to claim 5, wherein the intermediate layer is a polyester layer, an aluminum foil or an aluminum deposit.

7. The polyester film according to claim 1, wherein at least one of the layers A and B contain inorganic particles, organic particles or a mixture thereof.

**Patentansprüche**

1. Polyesterfolie zum Laminieren gezogener und abgestreckter Aluminiumdosen, umfassend eine Mehrschichtfolie, worin eine mit Aluminium zu kontaktierende Schicht A aus einem Polyester mit einem Schmelzpunkt von 160 bis 245°C zusammengesetzt ist und eine Dicke von nicht mehr als 3 μm sowie eine Oberflächenkristallinität von nicht mehr als 10 % aufweist, und eine Schicht B, die auf der Seite, welche nicht mit Aluminium in Berührung kommt, angeordnet ist, aus einem Polyester mit einem Copolymerisationsverhältnis von nicht mehr als 5 Mol-% aufgebaut ist und eine Dicke von 0,1 bis 3,0 μm aufweist.

2. Polyesterfolie nach Anspruch 1, wobei der die Schicht A aufbauende Polyester copolymerisiertes Polyethylenterephthalat mit einem Copolymerisationsverhältnis von nicht mehr als 40 Mol-% ist.

3. Polyesterfolie nach Anspruch 1, wobei der die Schicht A aufbauende Polyester eine Isophthalsäurekomponente, eine Diethylenglykolkomponente oder Triethylenglykolkomponente als Copolymerisationskomponenten aufweist.

4. Polyesterfolie nach Anspruch 1, wobei die Dicke der Schicht A 3 bis 30 $\mu$m beträgt.

5. Polyesterfolie nach Anspruch 1, wobei eine Zwischenschicht zwischen der Schicht A und der Schicht B vorgesehen ist.

6. Polyesterfolie nach Anspruch 5, wobei die Zwischenschicht eine Polyesterschicht, eine Aluminiumfolie oder eine Aluminiumabscheidung ist.

7. Polyesterfolie nach Anspruch 1, wobei mindestens eine der Schichten A und B anorganische Teilchen, organische Teilchen oder eine Mischung hiervon enthält.

**Revendications**

1. Film de polyester à stratifier sur des boîtes d'aluminium embouties et étirées, comprenant un film à plusieurs couches dont une couche A destinée à être mise en contact avec l'aluminium, est constitué d'un polyester ayant un point de fusion de 160 à 245 °C et une épaisseur non inférieure à 3 $\mu$m, ainsi qu'une cristallinité superficielle non supérieure à 10 %, et une couche B disposée sur le côté non en contact avec l'aluminium, est constituée d'un polyester ayant un taux de copolymérisation non supérieur à 5 moles % et une épaisseur de 0,1 à 3,0 $\mu$m.

2. Film de polyester selon la revendication 1, dans lequel le polyester constituant la couche A, est un polytéréphtalate d'éthylène copolymérisé ayant un taux de copolymérisation non supérieur à 40 moles %.

3. Film de polyester selon la revendication 1, dans lequel le polyester constituant la couche A comprend un composant dérivé d'acide isophtalique, un composant dérivé de diéthylène glycol ou un composant dérivé de triéthylène glycol en tant que composant de copolymérisation.

4. Film de polyester selon la revendication 1, dans lequel l'épaisseur de la couche A est de 3 à 30 $\mu$m.

5. Film de polyester selon la revendication 1, dans lequel une couche intermédiaire est prévue entre la couche A et la couche B.

6. Film de polyester selon la revendication 5, dans lequel la couche intermédiaire est une couche de polyester, une feuille d'aluminium ou un dépôt d'aluminium.

7. Film de polyester selon la revendication 1, dans lequel au moins l'une des couches A et B, contient des particules inorganiques, des particules organiques ou un mélange de celles-ci.